# EUROPEAN PATENT APPLICATION

(11) **EP 4 521 503 A1**
(43) Date of publication of application: **12.03.2025**
(21) Application number: 24199164.5
(22) Date of filing: 09.09.2024
(51) Int. Cl.: H01M 10/04, H01M 10/0587, H01M 10/42, H01M 50/474, H01M 50/486, H01M 50/489, H01M 10/0567

(54) **PROTECTIVE MEMBER, ELECTROCHEMICAL APPARATUS, AND ELECTRIC DEVICE**

(30) Priority: 11.09.2023 CN 202311166871
(71) Applicant: Ningde Amperex Technology Ltd., Ningde City, Fujian 352100 (CN)
(72) Inventor: QU, Qiong, Ningde City, Fujian Province 352100 (CN)
(74) Representative: Icosa

(57) **Abstract**

A protective member (20) is configured to be attached to an innermost curved portion of an electrode plate assembly (10) having a wound structure in the electrochemical apparatus (100). The protective member (20) includes a first substrate layer, a first adhesive layer (22), and a thickened layer (23). The first adhesive layer (22) is disposed on a surface of the first substrate layer, and the first adhesive layer (22) is configured to be adhered to the electrode plate assembly (10). The thickened layer (23) is disposed on a surface of the first substrate layer facing away from the first adhesive layer (22), and the thickened layer (23) is configured to be soluble in an electrolyte. In this application, before the electrode plate assembly (10) having the wound structure is hot pressed, the thickened layer (23) can support some layers with excessively small curvature radii in the wound structure, thereby helping to reduce the risk of damage to the layers with excessively small curvature radii during hot pressing. After the electrode plate assembly (10) is hot pressed and installed in a housing (30), the thickened layer (23) is dissolved in the electrolyte in the housing (30), thereby reducing an interfacial thickness difference of the electrode plate assembly (10) and helping to improve the thickness uniformity of all parts of the electrode plate assembly (10).

## Description

### TECHNICAL FIELD

This application relates to the field of energy storage technologies, and in particular, to a protective member, an electrochemical apparatus, and an electric device.

### BACKGROUND

With the continuous development and popularization of electric devices, the requirements for electrochemical apparatuses such as batteries are also increasingly high. Electrochemical apparatuses used in electric devices include electrode plate assemblies. The electrode plate assemblies include electrode plates and separators, and some electrode plate assemblies are stacked and wound to form wound structures. In consideration of safety issues, an innermost circle of a conventional electrode plate assembly having a wound structure is provided with a plurality of layers of separators in contact with each other. However, such arrangement also increases an overall thickness of a battery cell and reduces some energy density of the battery cell.

In the related art, there is a lack of an arrangement manner of removing the plurality of layers of separators at the innermost circle of the electrode plate assembly. Even if the plurality of layers of separators at the innermost circle are removed, the overall thickness of the battery cell is reduced, and a curvature radius of an innermost electrode plate is also reduced, leading to an increased risk of damage to the electrode plate.

### SUMMARY

In view of this, this application provides a protective member, conducive to protecting an electrode plate in an electrode plate assembly and reducing the risk of damage to the electrode plate.

According to a first aspect of this application, a protective member is provided. The protective member is configured to be attached to an innermost curved portion of an electrode plate assembly having a wound structure in an electrochemical apparatus, and the protective member includes a first substrate layer, a first adhesive layer, and a thickened layer. The first adhesive layer is disposed on a surface of the first substrate layer, and the first adhesive layer is configured to be adhered to the electrode plate assembly. The thickened layer is disposed on a surface of the first substrate layer facing away from the first adhesive layer, and the thickened layer is configured to be soluble in an electrolyte.

In the above embodiments, the protective member is attached to an electrode plate with a smaller curvature radius in an inner circle of the wound structure, and the protective member with the thickened layer can support the electrode plate and increase the curvature radius of the electrode plate, helping to reduce the stress generated when the electrode plate is pressed, thereby helping to reduce the risk of damage to the electrode plate during hot pressing. After the electrode plate assembly is hot pressed and installed in the housing, the thickened layer is dissolved in the electrolyte, reducing an interfacial thickness difference of the electrode plate assembly, thereby helping to improve the thickness uniformity of all parts of the electrode plate assembly, and reducing the risk of lithium precipitation and purple spots of the electrode plate assembly due to an excessive interfacial thickness difference.

In some embodiments, a thickness of the protective member is T, satisfying 100 um ≤ T ≤ 500 um.

In the above embodiments, the thickness T of the protective member satisfying the condition 100 um ≤ T ≤ 500 um is conducive to allowing the protective member to increase a curvature radius of the first curved portion so as to reduce the risk of damage to the first curved portion, and can also limit the thickness of the protective member to improve the thickness uniformity of a first electrode plate.

In some embodiments, 120 um ≤ T ≤ 350 um is satisfied.

In the above embodiments, when the thickness T of the protective member satisfies the condition 120 um ≤ T ≤ 350 um, the protective member can better support the first curved portion, further reducing the risk of damage to the first curved portion, and achieving both the increase in the curvature radius of the first curved portion and the improvement in the thickness uniformity of the first electrode plate.

In some embodiments, a thickness of the thickened layer is T₁, satisfying 60 um ≤ T₁ ≤ 460 um.

In the above embodiments, the thickness T₁ of the thickened layer satisfying the condition 60 um ≤ T₁ ≤ 460 um is conducive to allowing the protective member to increase the curvature radius of the first curved portion so as to reduce the risk of damage to the first curved portion, and can also limit an excessive thickness of the protective member to improve the thickness uniformity of the first electrode plate.

In some embodiments, 100 um ≤ T₁ ≤ 330 um is satisfied.

In the above embodiments, when the thickness T₁ of the thickened layer satisfies the condition 100 um ≤ T₁ ≤ 330 um, the protective member can better support the first curved portion, further reducing the risk of damage to the first curved portion, and achieving both the increase in the curvature radius of the first curved portion and the improvement in the thickness uniformity of the first electrode plate.

In some embodiments, the protective member further includes a second substrate layer and a second adhesive layer, where the second substrate layer is disposed on a surface of the thickened layer facing away from the first substrate layer, and the second adhesive layer is disposed on a surface of the second substrate layer facing away from the thickened layer.

In the above embodiments, the second substrate layer is disposed on the surface of the thickened layer facing away from the first substrate layer, making the protective member as an entirety, facilitating the disposition of the protective member on the electrode plate assembly, and also facilitating the disposition of the first substrate layer, the first adhesive layer, the second substrate layer, and the second adhesive layer at preset relative positions.

In some embodiments, a third adhesive layer is further provided between the thickened layer and the first substrate layer, and the third adhesive layer adheres the first substrate layer and the thickened layer.

In the above embodiments, the third adhesive layer is conducive to improving the connection strength between the thickened layer and the first substrate layer, reducing the risk of the thickened layer detaching under stress, and further reducing the risk of damage to the first curved portion. After the thickened layer is dissolved, the third adhesive layer is retained but not dissolved in the electrolyte.

In some embodiments, a thickness of the third adhesive layer is D, satisfying D ≤ 5 um.

In the above embodiment, the thickness D of the third adhesive layer satisfying the condition D ≤ 5 um is conducive to limiting the thickness of the third adhesive layer, thereby improving the thickness uniformity of the first electrode plate or the second electrode plate.

In some embodiments, the thickened layer is configured to melt when a temperature of the thickened layer reaches a temperature threshold, the temperature threshold being C, satisfying C > 55°C.

In the above embodiments, the temperature threshold C satisfying the condition C > 55°C is conducive to improving the stability of the thickened layer, and reducing the risk of the thickened layer melting during hot pressing and being less likely to support the first curved portion, thereby improving the reliability of the electrode plate assembly.

In some embodiments, a material of the first substrate layer includes at least one of polypropylene, polyimide, or polyethylene terephthalate.

In some embodiments, a material of the first adhesive layer includes at least one of butyl rubber, acrylic adhesive, modified polyolefin, or styrene-isoprene-styrene block copolymer rubber.

In some embodiments, a material of the thickened layer includes at least one of biphenyl, ethylene sulfate, or propylene sulfate, where the biphenyl, ethylene sulfate, and propylene sulfate are additives of the electrolyte.

In the above embodiments, the material setting of the thickened layer allows the thickened layer not to form new impurities in the electrolyte after dissolved in the electrolyte, helping to reduce adverse effects on the performance of the electrolyte.

According to a second aspect of this application, an electrochemical apparatus is provided. The electrochemical apparatus includes an electrode plate assembly and a protective member, where the electrode plate assembly includes a first electrode plate, a second electrode plate, a first separator, and a second separator. The first electrode plate includes a first current collector and a first active substance layer, where the first active substance layer is disposed on a surface of the first current collector. The second electrode plate includes a second current collector and a second active substance layer, where the second active substance layer is disposed on a surface of the second current collector. The first separator is disposed between the first electrode plate and the second electrode plate, and the first separator has a first end portion. The second separator is disposed between the first electrode plate and the second electrode plate, and the second separator has a second end portion. The first electrode plate, the second electrode plate, the first separator, and the second separator are wound; in a winding direction from inside to outside of the electrode plate assembly, the first electrode plate includes a first starting section, the first starting section having a third end portion and a first curved portion disposed along a first direction, the second electrode plate includes a second starting section, the second starting section having a fourth end portion and a second curved portion disposed along the first direction; and in the first direction, the first end portion, the fourth end portion, and the second end portion are opposite the first curved portion. The protective member includes a first substrate layer, a first adhesive layer, and a thickened layer, where the first adhesive layer is disposed on a surface of the first substrate layer, the first adhesive layer is adhered to the first active substance layer of the first curved portion facing the fourth end portion, the thickened layer is disposed on a surface of the first substrate layer facing away from the first adhesive layer, and the thickened layer is configured to be soluble in an electrolyte and decomposed into at least one additive of biphenyl, ethylene sulfate, or propylene sulfate in the electrolyte.

In the above embodiments, the protective member is attached to a side of the first curved portion facing the fourth end portion, so that the protective member can share the acting force applied to the first curved portion, achieving an effect of enhancing the structural strength of the first curved portion, thereby helping to reduce the risk of damage to the first curved portion during hot pressing.

In some embodiments, when viewed in a second direction, the protective member partially overlaps with the first separator, the second direction being perpendicular to the first direction; and in the first direction, a length of an overlapping region of the protective member and the first separator is S, satisfying 2 mm ≤ S ≤ 10 mm.

In the above embodiments, on one hand, such arrangement allows the protective member to provide protection on the fourth end portion, reducing the risk of the fourth end portion bypassing the first end portion and directly coming into contact with the first active substance layer on the first current collector, and further reducing the risk of burrs at the fourth end portion piercing the separator and directly coming into contact with the first active substance layer on the first current collector. On the other hand, since a portion of the first active substance layer of the first curved portion facing the fourth end portion does not have the second active substance layer opposite it, such arrangement allows the protective member to more completely cover the first active substance layer of the first curved portion facing the fourth end portion, thereby reducing the risk of lithium precipitation.

In the above embodiments, the protective member with the thickened layer can support the first curved portion and increase a curvature radius of the first curved portion, helping to reduce the stress on the first curved portion during hot pressing, thereby reducing the risk of damage to the first curved portion. In addition, the thickened layer is configured to be dissolved in the electrolyte after the electrode plate assembly is installed in the housing, so that an interfacial thickness difference of the first curved portion and other regions of the first electrode plate is reduced, thereby helping to improve the thickness uniformity of all parts of the first electrode plate, and reducing the risk of lithium precipitation and purple spots of the electrode plate assembly due to uneven pressure on the second electrode plate during formation.

In some embodiments, the protective member extends along the winding direction from inside to outside of the electrode plate assembly; and in an extension direction of the protective member, a length of the first substrate layer is L, and a length of the thickened layer is L₁, satisfying 5 mm ≤ L₁ ≤ L.

In the above embodiments, L and Li satisfying the condition 5 mm ≤ L₁ ≤ L is conducive to increasing an area of the first curved portion covered by the thickened layer, thereby helping to enhance the support effect on the first curved portion and reduce the risk of damage to the first curved portion. In addition, this can limit the volume of the thickened layer, reducing the risk of adverse effects on the performance of the electrolyte after the thickened layer is dissolved in the electrolyte.

In some embodiments, in the first direction, a minimum distance between the fourth end portion and the first curved portion is F, satisfying 100 um ≤ F ≤ 500 um.

In the above embodiments, F satisfying the condition 100 um ≤ F ≤ 500 um is conducive to reducing the risk of direct contact between the second active substance layer of the fourth end portion and the first active substance layer. In some embodiments, the protective member further includes a second substrate layer and a second adhesive layer, where the second adhesive layer is disposed on a surface of the second substrate layer, the second adhesive layer is adhered to the first separator, and the second adhesive layer is further adhered to the second separator across the fourth end portion.

In the above embodiments, the second adhesive layer being adhered to the first separator and the second separator can limit the movement and contraction of the first separator and the second separator, helping to solve the problems of movement and contraction of the first separator and the second separator when the electrochemical apparatus is subjected to impact, rotation, and the like.

In some embodiments, when viewed in the second direction, the first adhesive layer partially overlaps with the first separator, and the second adhesive layer partially overlaps with the first separator, the second direction being perpendicular to the first direction. In the first direction, a length of an overlapping region of the first adhesive layer and the first separator is S₁, and a length of an overlapping region of the second adhesive layer and the first separator is S₂, satisfying S₂ < S₁.

In the above embodiments, S₂ and S₁ satisfy the condition S₂ < S₁ is conducive to allowing an area of the first active substance layer covered by the protective member to be larger than an area of the second active substance layer covered by the protective member, helping to increase an area of the second electrode plate for receiving lithium ions from the first electrode plate, thereby helping to reduce the risk of lithium precipitation.

In some embodiments, a peel strength between the second adhesive layer and the first separator is P₁, satisfying P₁ ≥ 0.05 N/mm; and a peel strength between the second adhesive layer and the second separator is P₂, satisfying P₂ ≥ 0.05 N/mm.

In the above embodiments, P₁ and P₂ satisfy the condition P₁ ≥ 0.05 N/mm and P₂ ≥ 0.05 N/mm is conducive to improving the capability of the second adhesive layer in limiting the movement of the first separator and the second separator, thereby helping to solve the problems of movement and contraction of the first separator and the second separator.

In some embodiments, in the first direction, the third end portion is opposite the second curved portion.

In the above embodiments, in the first direction, the third end portion being opposite the second curved portion is conducive to improving the space utilization of the wound structure, thereby reducing an overall thickness of the electrode plate assembly and increasing the energy density of the electrochemical apparatus.

In some embodiments, the first active substance layer has a cathodic polarity, and the first current collector is an aluminum foil; and the second active substance layer has an anodic polarity, and the second current collector is a copper foil.

In the above embodiments, the ductility of the copper foil is better than that of the aluminum foil, so that when the curvature radius is small, the aluminum foil is more prone to damage than the copper foil. The protective member is adhered to the first active substance layer, helping to reduce the risk of damage to the first current collector, thereby helping to improve the reliability of the electrode plate assembly.

In some embodiments, when viewed in the second direction, the first end portion, the second end portion, and the fourth end portion are aligned with each other, the second direction being perpendicular to the first direction.

In the above embodiments, the first end portion, the second end portion, and the fourth end portion being aligned with each other helps to shorten the lengths of the first separator and second separator, thereby helping to reduce an overall thickness of a battery cell.

According to a third aspect, an electric device is provided. The electric device includes the electrochemical apparatus according to any one of the above embodiments.

In the above embodiments, the risk of damage and lithium precipitation in the electrode plate assembly of the electrochemical apparatus is reduced, thereby helping to improve the reliability of the electric device.

### BRIEF DESCRIPTION OF DRAWINGS

FIG. 1 is a schematic diagram of an electric device according to an embodiment of this application.
FIG. 2 is a schematic diagram of a wound structure of an electrode plate assembly according to an embodiment of this application.
FIG. 3 is a schematic structural diagram of an electrochemical apparatus according to an embodiment of this application.
FIG. 4 is an exploded view of the electrochemical apparatus in FIG. 3.
FIG. 5 is a partial schematic diagram of an electrode plate assembly according to an embodiment of this application.
FIG. 6 is a side view of an unfolded protective member according to an embodiment of this application.
FIG. 7 is a partial schematic diagram of an electrode plate assembly according to an embodiment of this application.
FIG. 8 is a partial schematic diagram of an electrode plate assembly according to an embodiment of this application.
FIG. 9 is a side view of an unfolded protective member according to an embodiment of this application.
FIG. 10 is a side view of an unfolded protective member according to an embodiment of this application.
FIG. 11 is a side view of an unfolded protective member according to an embodiment of this application.

**Reference signs of main components**

| | |
|---|---|
| Electrochemical apparatus | 100 |
| Electrode plate assembly | 10 |
| First electrode plate | 11 |
| First current collector | 11a |
| First active substance layer | 11b |
| First starting section | 111 |
| Third end portion | 1111 |
| First curved portion | 1112 |
| Second electrode plate | 12 |
| Second current collector | 12a |
| Second active substance layer | 12b |
| Second starting section | 121 |
| Fourth end portion | 1211 |
| Second curved portion | 1212 |
| First separator | 13 |
| First end portion | 131 |
| Second separator | 14 |
| Second end portion | 141 |
| Protective member | 20 |
| First substrate layer | 21 |
| First adhesive layer | 22 |
| Thickened layer | 23 |
| Second substrate layer | 24 |
| Second adhesive layer | 25 |
| Third adhesive layer | 26 |
| Fourth adhesive layer | 27 |
| Housing | 30 |
| First electrode terminal | 40 |
| Second electrode terminal | 50 |
| Electric device | 1000 |
| Device body | 200 |
| First direction | X |
| Second direction | Y |
| Third direction | Z |

### DESCRIPTION OF EMBODIMENTS

The following describes the technical solutions in some embodiments of this application with reference to the accompanying drawings in these embodiments of this application. Apparently, the described embodiments are only some rather than all of the embodiments of this application.

It should be noted that, when one component is deemed as being "connected to" another component, it may be connected to the another component directly or with a component possibly present therebetween. When one component is assumed as being "disposed on/in" another component, the component may be provided directly on/in the another component or with a component possibly present therebetween.

Unless otherwise stated, the term "a plurality of" used herein means two or more.

The terms "first", "second", and the like are merely intended to distinguish between different objects, and shall not be understood as any indication or implication of relative importance or any implicit indication of the number, sequence or primary-secondary relationship of the technical features indicated.

The term "perpendicular" is used for describing an ideal state of two components. During actual production or use, an approximately perpendicular state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°.

It should be noted that a value greater than, equal to, or less than an endpoint value should be understood that a tolerance of ±10% of the endpoint value is allowed. For example, A greater than B by 10 should be understood to include a case where A is greater than B by 9 and a case where A is greater than B by 11.

It should be understood that the dimensions of the layers, regions, films, plates, blocks, columns, protrusions, recesses, and the like shown in the accompanying drawings are provided for better understanding and easier description. This application is not limited to the dimensions shown in the drawings. To make this application clear, elements unrelated to the description have been omitted from the details of this specification.

Unless otherwise defined, all technical and scientific terms used herein shall have the same meanings as commonly understood by persons skilled in the art to which this application pertains. The terms used herein in the specification of this application are for description of specific embodiments only without any intention to limit this application.

This application discloses a protective member. The protective member is configured to be attached to an electrode plate assembly having a wound structure in an electrochemical apparatus, the protective member is located inside the wound structure, and the protective member includes a first substrate layer, a first adhesive layer, and a thickened layer. The first adhesive layer is disposed on a surface of the first substrate layer, and the first adhesive layer is configured to be adhered to the electrode plate assembly. The thickened layer is disposed on a surface of the first substrate layer facing away from the first adhesive layer, and the thickened layer is configured to be soluble in an electrolyte.

The above protective member can be attached to an electrode plate with a smaller curvature radius in an inner circle of the wound structure, and the protective member with the thickened layer can support the electrode plate and increase the curvature radius of the electrode plate, helping to reduce the stress generated when the electrode plate is pressed, thereby helping to reduce the risk of damage to the electrode plate during hot pressing. After the electrode plate assembly is hot pressed and installed in the housing, the thickened layer is dissolved in the electrolyte, reducing an interfacial thickness difference of the electrode plate assembly, thereby helping to improve the thickness uniformity of all parts of the electrode plate assembly, and reducing the risk of lithium precipitation and purple spots of the electrode plate assembly due to an excessive interfacial thickness difference.

The following describes some embodiments of this application with reference to the accompanying drawings. Without conflict, the following embodiments and features in these embodiments in this application may be combined with each other.

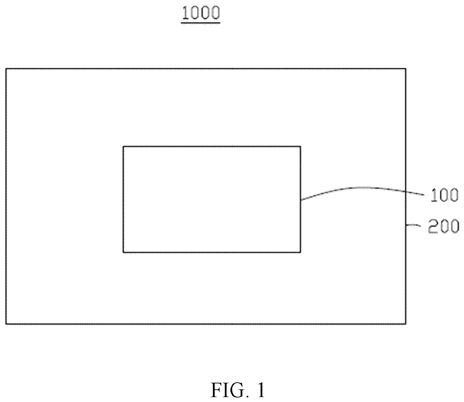

Referring to FIG. 1, an embodiment of this application provides an electric device 1000. The electric device 1000 includes an electrochemical apparatus 100.

In some embodiments, referring to FIG. 1, the electric device 1000 further includes a device body 200. The electrochemical apparatus 100 is installed in the device body 200.

In some embodiments, the electric device 1000 may be a mobile phone, a notebook computer, a tablet computer, a drone, an electric tool, an electric toy, a game console, a video recorder, a portable tape recorder, a radio, a smart watch, or the like. Details are not listed herein.

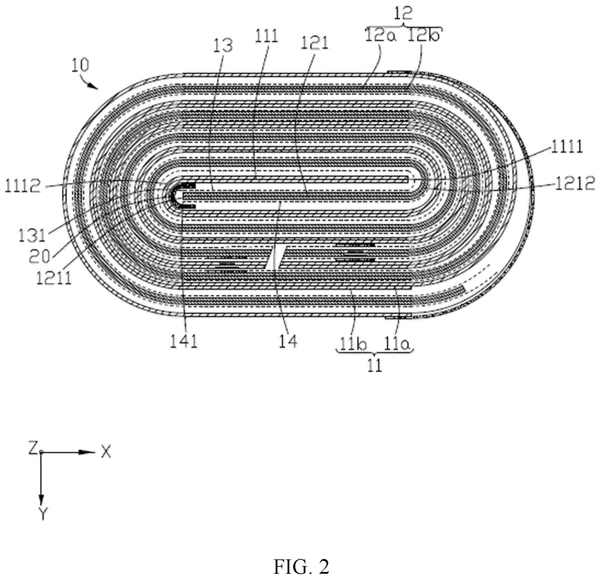

In some embodiments, referring to FIG. 2, the electrochemical apparatus 100 includes an electrode plate assembly 10. The electrode plate assembly 10 includes a first electrode plate 11, a second electrode plate 12, a first separator 13, and a second separator 14. The first electrode plate 11, the first separator 13, the second electrode plate 12, and the second separator 14 are stacked and wound to form a wound structure. The first electrode plate 11 has a first polarity, and the second electrode plate 12 has a second polarity, where the first polarity and the second polarity are different.

In some embodiments, referring to FIG. 2, the first electrode plate 11 includes a first current collector 11a and a first active substance layer 11b, where the first active substance layer 11b is disposed on a surface of the first current collector 11a. The second electrode plate 12 includes a second current collector 12a and a second active substance layer 12b, where the second active substance layer 12b is disposed on a surface of the second current collector 12a.

In an example in which the first electrode plate 11 is a cathode plate and the second electrode plate 12 is an anode plate, the first current collector 11a and the second current collector 12a may be metal layers. The first current collector 11a may be a metal layer including at least one of aluminum, nickel, tantalum, or titanium, such as an aluminum foil. The second current collector 12a may be a metal layer including at least one of copper, nickel, tantalum, or titanium, such as a copper foil.

In an example in which the first electrode plate 11 is a cathode plate and the second electrode plate 12 is an anode plate, the first active substance layer 11b has a cathodic polarity, and the first active substance layer 11b includes a cathode active material, where the cathode active material may include at least one of lithium cobaltate, lithium nickel cobalt manganate, lithium nickel cobalt aluminate, lithium iron phosphate, lithium manganese iron phosphate, or lithium manganate. The second active substance layer 12b has an anodic polarity, and the second active substance layer 12b includes an anode material, where an anode active material may include at least one of graphite, hard carbon, soft carbon, silicon, a silicon-oxygen material, or a silicon-carbon material.

In some embodiments, the first active substance layer 11b has a cathodic polarity, and the first current collector 11a is an aluminum foil; and the second active substance layer 12b has an anodic polarity, and the second current collector 12a is a copper foil.

In the electrode plate assembly 10 having the wound structure, the first separator 13 is disposed between the first electrode plate 11 and the second electrode plate 12 for separating the first electrode plate 11 and the second electrode plate 12; and the second separator 14 is disposed between the first electrode plate 11 and the second electrode plate 12 for separating the first electrode plate 11 and the second electrode plate 12.

In the electrode plate assembly 10 having the wound structure, in a first direction X, the electrode plate assembly 10 has a straight portion and arc portions located on two sides of the straight portion. The first direction X is defined as a width direction or length direction of the electrode plate assembly 10, a second direction Y is defined as a thickness direction of the electrode plate assembly 10, and a third direction Z is defined as a length direction or width direction of the electrode plate assembly 10, where the first direction X is perpendicular to both the second direction Y and the third direction Z.

In some embodiments, referring to FIG. 2, the first separator 13 has a first end portion 131, and the second separator 14 has a second end portion 141. It can be understood that in a winding direction from inside to outside of the electrode plate assembly 10, the first end portion 131 is an end portion of a starting section of the first separator 13, and the second end portion 141 is an end portion of a starting section of the second separator 14. In the winding direction from inside to outside of the electrode plate assembly 10, the first electrode plate 11 includes a first starting section 111, the first starting section 111 having a third end portion 1111 and a first curved portion 1112 disposed along the first direction X, and the second electrode plate 12 includes a second starting section 121, the second starting section 121 having a fourth end portion 1211 and a second curved portion 1212 disposed along the first direction X. In the first direction X, the first end portion 131, the fourth end portion 1211, and the second end portion 141 are opposite the first curved portion 1112. Such arrangement is conducive to shortening the lengths of the first separator 13 and second separator 14, thereby helping to reduce an overall thickness of a battery cell.

It can be understood that a side of the first curved portion 1112 opposite the first end portion 131, the second end portion 141, and the fourth end portion 1211 is a concave side of the first curved portion 1112. To be specific, the concave side of the first curved portion 1112 faces the first end portion 131, the second end portion 141, and the fourth end portion 1211.

In some embodiments, when viewed in the second direction Y, the first end portion 131, the second end portion 141, and the fourth end portion 1211 are substantially aligned with each other. The arrangement manner in these embodiments can be achieved by stacking the first separator 13, the second separator 14, and the second electrode plate 12 and then cutting end portions uniformly.

In some embodiments, referring to FIG. 2, in the first direction X, the third end portion 1111 is opposite the second curved portion 1212. Such arrangement is conducive to improving the space utilization of the wound structure, thereby reducing an overall thickness of the electrode plate assembly 10 and increasing the energy density of the electrochemical apparatus 100.

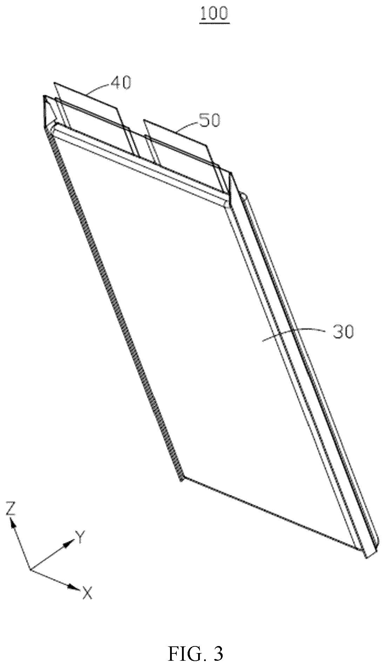

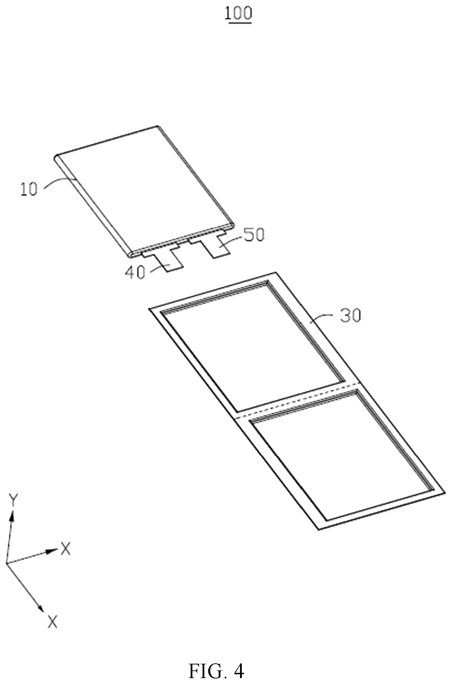

In some embodiments, referring to FIGs. 3 and 4, the electrochemical apparatus 100 further includes a housing 30, where the housing 30 is configured to accommodate the electrode plate assembly 10, and the housing 30 may be an aluminum-plastic film.

In some embodiments, the housing 30 is injected with an electrolyte. Components of the electrolyte include a solvent, a lithium salt, and an additive. The solvent may be cyclic carbonate (PC or EC), linear carbonate (DEC, DMC, or EMC), carboxylic ester (MF, MA, EA, or MP), another organic solvent, or a combination thereof. The lithium salt may be LiPF₆, LiBF₄, LiClO₄, LiB(C₆H), LiCH₃SO₃, LiCF₃SO₃LiN(SO₂CF₃)₂, LiC(SO₂CF₃)₃, or LiBOB.

It should be noted that a hot pressing process typically needs to be performed on the electrode plate assembly 10 after the electrode plate assembly 10 is wound, allowing the wound structure to be wound more compactly and formed. Then, the electrode plate assembly 10 is installed in the housing 30 and the electrolyte is injected. It is worth mentioning that, to make the drawings clearer, the electrolyte is omitted in FIG. 4.

In some embodiments, referring to FIGs. 3 and 4, the electrochemical apparatus 100 further includes a first electrode terminal 40 and a second electrode terminal 50. The first electrode terminal 40 is connected to the first electrode plate 11, allowing the first electrode terminal 40 to have a first polarity; and the second electrode terminal 50 is connected to the second electrode plate 12, allowing the second electrode terminal 50 to have a second polarity. Along the third direction Z, the first electrode terminal 40 extends out of the housing 30 from one end of the electrode plate assembly 10, and the second electrode terminal 50 extends out of the housing 30 from one end of the electrode plate assembly 10. The first electrode terminal 40 and the second electrode terminal 50 are used to lead the polarity of the electrode plate assembly 10 out of the housing 30.

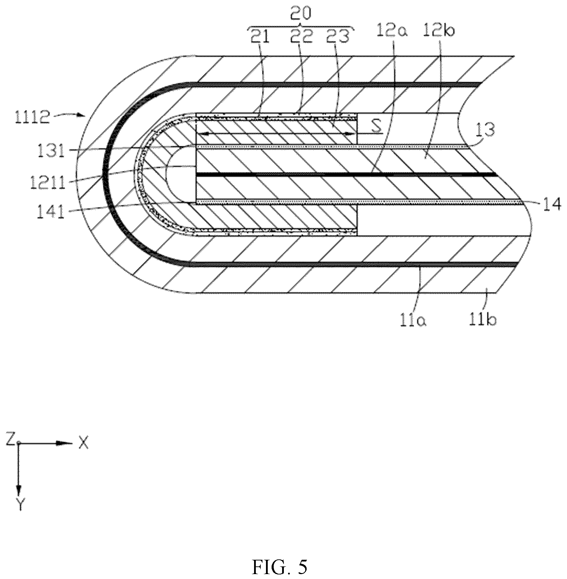

In some embodiments, referring to FIG. 5, the electrochemical apparatus 100 further includes a protective member 20. The protective member 20 includes a first substrate layer 21 and a first adhesive layer 22. The first adhesive layer 22 is disposed on a surface of the first substrate layer 21, and the first adhesive layer 22 is adhered to the first active substance layer 11b of the first curved portion 1112 facing the fourth end portion 1211.

In the related art, after a plurality of layers of separators at an innermost circle of the electrode plate assembly 10 having the wound structure are removed, a curvature radius of the first curved portion 1112 at the innermost circle is also reduced, leading to an increased risk of damage to the first electrode plate 11. For example, after the curvature radius of the first curved portion 1112 is reduced, the stress on the first curved portion 1112 during hot pressing increases, making it more prone to defects such as cracks during hot pressing. In this application, the protective member 20 is attached to a side of the first curved portion 1112 facing the fourth end portion 1211, so that the protective member 20 can share the acting force applied to the first curved portion 1112, achieving an effect of enhancing the structural strength of the first curved portion 1112, thereby helping to reduce the risk of damage to the first curved portion 1112 during hot pressing.

In these embodiments where the first current collector 11a is an aluminum foil and the second current collector 12a is a copper foil, the ductility of the copper foil is better than that of the aluminum foil, so that when the curvature radius is small, the aluminum foil is more prone to damage than the copper foil. The protective member 20 is adhered to the first active substance layer 11b, helping to reduce the risk of damage to the first current collector 11a, thereby helping to improve the reliability of the electrode plate assembly 10.

In some embodiments, referring to FIG. 5, when viewed in the second direction Y, the protective member 20 partially overlaps with the first separator 13. In the first direction X, a length of an overlapping region of the protective member 20 and the first separator 13 is S, satisfying 2 mm ≤ S ≤ 10 mm. On one hand, such arrangement allows the protective member 20 to provide protection on the fourth end portion 1211, reducing the risk of the fourth end portion 1211 bypassing the first end portion 131 and directly coming into contact with the first active substance layer 11b on the first current collector 11a, and further reducing the risk of burrs at the fourth end portion 1211 piercing the separator and directly coming into contact with the first active substance layer 11b on the first current collector 11a. On the other hand, since a portion of the first active substance layer 11b of the first curved portion 1112 facing the fourth end portion 1211 does not have the second active substance layer 12b opposite it, such arrangement in these embodiments allows the protective member 20 to more completely cover the first active substance layer 11b of the first curved portion 1112 facing the fourth end portion 1211, thereby reducing the risk of lithium precipitation.

As an illustrative example, the length S of the overlapping region of the protective member 20 and the first separator 13 may specifically be 2 mm, 3 mm, 4 mm, 5 mm, 6 mm, 7 mm, 8 mm, 9 mm, or 10 mm. Details are not listed herein.

In some embodiments, the protective member 20 partially overlaps with the second separator 14. For the length of an overlapping region of the protective member 20 and the second separator 14 in the first direction X and the beneficial effects, reference may be made to the length S of the overlapping region of the protective member 20 and the first separator 13 and the beneficial effects. Details are not described herein again.

In some embodiments, referring to FIG. 5, the protective member 20 further includes a thickened layer 23, where the thickened layer 23 is disposed on a surface of the first substrate layer 21 facing away from the first adhesive layer 22, and the thickened layer 23 is configured to be soluble in an electrolyte and decomposed into at least one additive of biphenyl, ethylene sulfate, or propylene sulfate in the electrolyte.

It can be understood that the protective member 20 with the thickened layer 23 can support the first curved portion 1112 and increase the curvature radius of the first curved portion 1112, helping to reduce the stress on the first curved portion 1112 during hot pressing, thereby reducing the risk of damage to the first curved portion 1112. In addition, after the electrolyte is injected into the housing 30, pressure is applied to the electrochemical apparatus 100 during formation. An excessive interfacial thickness difference of an electrode plate is more likely to cause lithium precipitation or poor electrolyte infiltration of the electrode plate assembly. The thickened layer 23 is configured to be dissolved in the electrolyte after the electrode plate assembly 10 is installed in the housing 30, so that an interfacial thickness difference of the first electrode plate 11 is reduced, thereby helping to improve the thickness uniformity of all parts of the first electrode plate 11, and reducing the risk of lithium precipitation and purple spots of the electrode plate assembly 10 caused by uneven pressure on the second electrode plate 12 during formation due to an excessive interfacial thickness difference of the first electrode plate 11. The purple spots generated at a position indicates that incomplete electrolyte infiltration is present at this position of the electrode plate assembly 10.

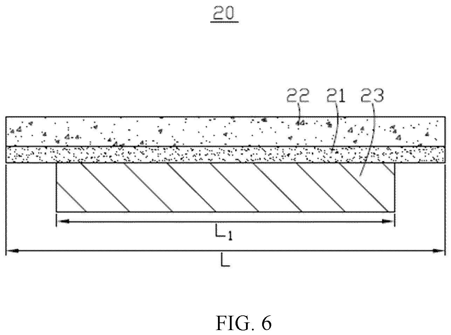

In some embodiments, referring to FIG. 6, the protective member 20 extends along the winding direction from inside to outside of the electrode plate assembly 10; and in an extension direction of the protective member 20, a length of the first substrate layer 21 is L, and a length of the thickened layer 23 is L₁, satisfying 5 mm ≤ L₁ ≤ L. The length Li of the thickened layer 23 satisfying the above condition is conducive to increasing an area of the first curved portion 1112 covered by the thickened layer 23, thereby helping to enhance the support effect on the first curved portion 1112 and reduce the risk of damage to the first curved portion 1112. In addition, this can limit the volume of the thickened layer 23, reducing the risk of adverse effects on the performance of the electrolyte after the thickened layer 23 is dissolved in the electrolyte.

As an illustrative example, the length Li of the thickened layer 23 may specifically be 6 mm, 7 mm, 8 mm, 9 mm, or 10 mm. Details are not listed herein.

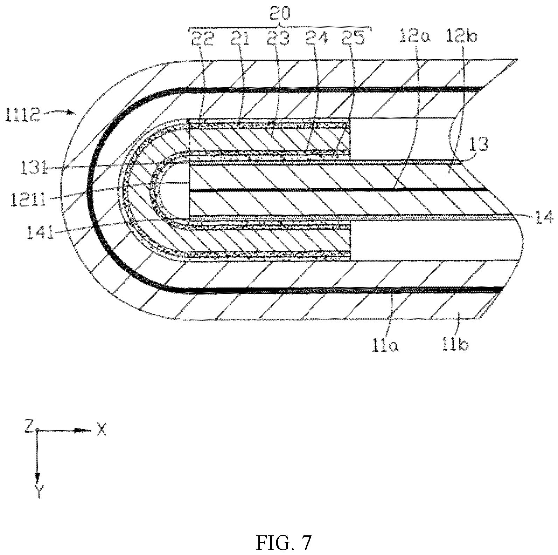

In some embodiments, referring to FIG. 7, the protective member 20 further includes a second substrate layer 24 and a second adhesive layer 25, where the second adhesive layer 25 is disposed on a surface of the second substrate layer 24, the second adhesive layer 25 is adhered to the first separator 13, and the second adhesive layer 25 is further adhered to the second separator 14 across the fourth end portion 1211. The second adhesive layer 25 being adhered to the first separator 13 and the second separator 14 can limit the movement and contraction of the first separator 13 and the second separator 14, helping to solve the problems of movement and contraction of the first separator 13 and the second separator 14 when the electrochemical apparatus 100 is subjected to impact, rotation, and the like.

In some embodiments, a peel strength between the second adhesive layer 25 and the first separator 13 is P₁, satisfying P₁ ≥ 0.05 N/mm; and a peel strength between the second adhesive layer 25 and the second separator 14 is P₂, satisfying P₂ ≥ 0.05 N/mm. The peel strength P₁ between the second adhesive layer 25 and the first separator 13 and the peel strength P₂ between the second adhesive layer 25 and the second separator 14 satisfying the above conditions is conducive to improving the capability of the second adhesive layer 25 in limiting the movement of the first separator 13 and the second separator 14, thereby helping to solve the problems of movement and contraction of the first separator 13 and the second separator 14.

A test method of the peel strength P₁ between the second adhesive layer 25 and the first separator 13 is as follows:
The electrode plate assembly 10 is disassembled to obtain the second adhesive layer 25 and the first separator 13 adhered to each other. After the electrolyte is removed, a sample with a width of 25 mm is cut out. The first separator 13 of the sample is attached to a steel plate via a double-sided tape. The second adhesive layer 25 is pasted using an adhesive tape, and an end of the adhesive tape away from the second adhesive layer 25 is fixed to a tensile machine. Then, the adhesive tape is pulled using the tensile machine at a speed of 300 mm/min in a direction of 180° with respect to the steel plate, and a tensile force (F·N) in a stable state is recorded, to obtain the peel strength P₁ between the second adhesive layer 25 and the first separator 13.

A length of the sample may be 30 mm-100 mm and may specifically be 30 mm, 35 mm, 40 mm, 45 mm, 50 mm, 55 mm, 60 mm, 65 mm, 70 mm, 75 mm, 80 mm, 85 mm, 90 mm, 95 mm, or 100 mm. Details are not listed herein.

For a test method of the peel strength P₂ between the second adhesive layer 25 and the second separator 14, reference may be made to the test method of the peel strength P₁ between the second adhesive layer 25 and the first separator 13. Details are not described herein again.

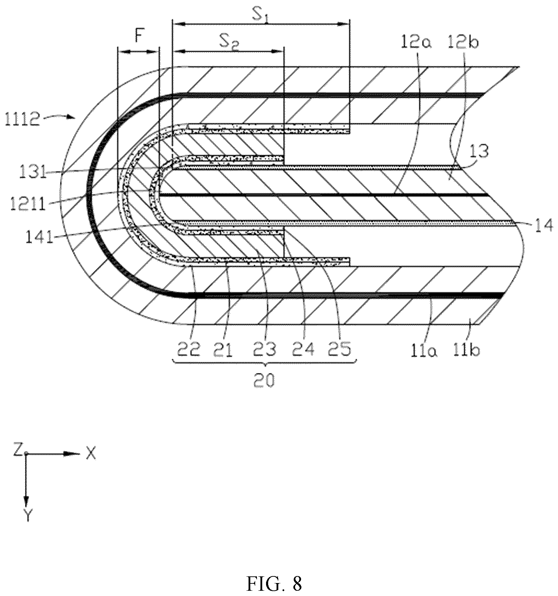

In some embodiments, referring to FIG. 8, when viewed in the second direction Y, the first adhesive layer 22 partially overlaps with the first separator 13, and the second adhesive layer 25 partially overlaps with the first separator 13. In the first direction X, a length of an overlapping region of the first adhesive layer 22 and the first separator 13 is S₁, and a length of an overlapping region of the second adhesive layer 25 and the first separator 13 is S₂, satisfying S₂ < S₁. Such arrangement is conducive to allowing an area of the first active substance layer 11b covered by the protective member 20 to be larger than an area of the second active substance layer 12b covered by the protective member 20, helping to increase an area of the second electrode plate 12 for receiving lithium ions from the first electrode plate 11, thereby helping to reduce the risk of lithium precipitation.

In some embodiments, the first adhesive layer 22 partially overlaps with the second separator 14, and the second adhesive layer 25 partially overlaps with the second separator 14. For a relationship between a length of an overlapping region of the first adhesive layer 22 and the second separator 14 and a length of an overlapping region of the second adhesive layer 25 and the second separator 14 and the corresponding beneficial effects, reference may be made to the relationship between the above lengths S₁ and S₂ and the beneficial effects. Details are not described herein again.

In some embodiments, referring to FIGs. 7 and 8, the second substrate layer 24 is disposed on a surface of the thickened layer 23 facing away from the first substrate layer 21, and the second adhesive layer 25 is disposed on a surface of the second substrate layer 24 facing away from the thickened layer 23. Such arrangement makes the protective member 20 as an entirety, facilitating the disposition of the protective member 20 on the electrode plate assembly 10, and also facilitating the disposition of the first substrate layer 21, the first adhesive layer 22, the second substrate layer 24, and the second adhesive layer 25 at preset relative positions.

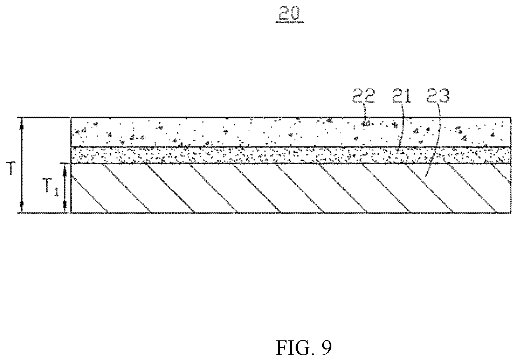

In some embodiments, referring to FIG. 9, when the thickened layer 23 is not dissolved in the electrolyte, a thickness of the protective member 20 is T, satisfying 100 um ≤ T ≤ 500 um. The thickness T of the protective member 20 satisfying this condition is conducive to allowing the protective member 20 to increase the curvature radius of the first curved portion 1112 so as to reduce the risk of damage to the first curved portion 1112, and can also limit the thickness of the protective member 20 to improve the thickness uniformity of the first electrode plate 11.

As an illustrative example, the thickness T of the protective member 20 may specifically be 100 um, 120 um, 150 um, 200 um, 250 um, 300 um, 350 um, 400 um, 450 um, or 500 um. Details are not listed herein.

In some embodiments, 120 um ≤ T ≤ 350 um is satisfied. When the thickness T of the protective member 20 satisfies this condition, the protective member 20 can better support the first curved portion 1112, further reducing the risk of damage to the first curved portion 1112, and achieving both the increase in the curvature radius of the first curved portion 1112 and the improvement in the thickness uniformity of the first electrode plate 11.

In some embodiments, referring to FIG. 8, in the first direction X, a minimum distance between the fourth end portion 1211 and the first curved portion 1112 is F, satisfying 100 um ≤ F ≤ 500 um. The minimum distance F satisfying this condition is conducive to reducing the risk of direct contact between the second active substance layer 12b of the fourth end portion 1211 and the first active substance layer 11b.

As an illustrative example, the minimum distance F between the fourth end portion 1211 and the first curved portion 1112 may specifically be 100 um, 120 um, 150 um, 200 um, 250 um, 300 um, 350 um, 400 um, 450 um, or 500 um. Details are not listed herein.

In some embodiments, 120 um ≤ F ≤ 350 um is satisfied, so that the risk of contact between the second active substance layer 12b and the first active substance layer 11b is reduced, and the space utilization of the wound structure by the electrode plate assembly 10 is improved.

In some embodiments, referring to FIG. 9, a thickness of the thickened layer 23 is T₁, satisfying 60 um ≤ T₁ ≤ 460 um. The thickness T₁ of the thickened layer 23 satisfying this condition is conducive to allowing the protective member 20 to increase the curvature radius of the first curved portion 1112 so as to reduce the risk of damage to the first curved portion 1112, and can also limit an excessive thickness of the protective member 20 to improve the thickness uniformity of the first electrode plate 11.

As an illustrative example, the thickness T₁ of the thickened layer 23 may specifically be 60 um, 80 um, 100 um, 120 um, 150 um, 200 um, 250 um, 300 um, 330 um, 350 um, 400 um, 420 um, 440 um, or 460 um. Details are not listed herein.

In some embodiments, referring to FIG. 9, 100 um ≤ T₁ ≤ 330 um is satisfied. When the thickness T₁ of the thickened layer 23 satisfies this condition, the protective member 20 can better support the first curved portion 1112, further reducing the risk of damage to the first curved portion 1112, and achieving both the increase in the curvature radius of the first curved portion 1112 and the improvement in the thickness uniformity of the first electrode plate 11.

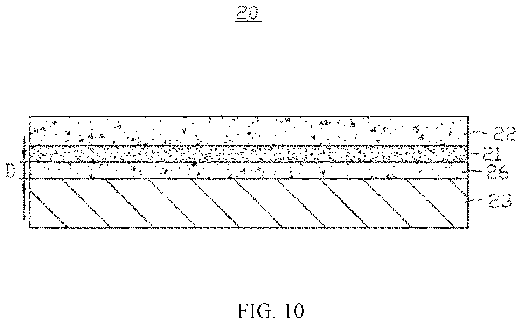

In some embodiments, referring to FIG. 10, a third adhesive layer 26 is further provided between the thickened layer 23 and the first substrate layer 21, and the third adhesive layer 26 adheres the first substrate layer 21 and the thickened layer 23. The third adhesive layer 26 is conducive to improving the connection strength between the thickened layer 23 and the first substrate layer 21, reducing the risk of the thickened layer 23 detaching under stress, and further reducing the risk of damage to the first curved portion 1112. After the thickened layer 23 is dissolved, the third adhesive layer 26 is retained but not dissolved in the electrolyte.

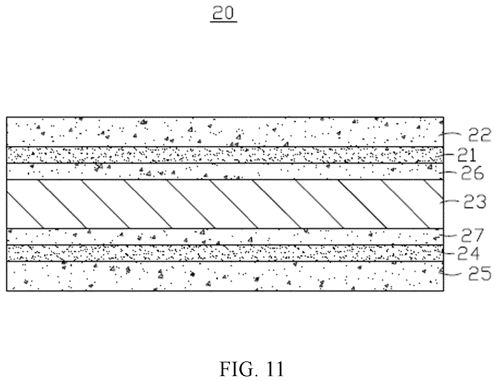

In some embodiments, referring to FIG. 11, a fourth adhesive layer 27 is further provided between the thickened layer 23 and the second substrate layer 24, and the fourth adhesive layer 27 adheres the second substrate layer 24 and the thickened layer 23. The fourth adhesive layer 27 is conducive to improving the connection strength between the thickened layer 23 and the second substrate layer 24, reducing the risk of the thickened layer 23 detaching under stress, and further reducing the risk of damage to the first curved portion 1112. After the thickened layer 23 is dissolved, the fourth adhesive layer 27 is retained but not dissolved in the electrolyte.

In some embodiments, referring to FIG. 10, a thickness of the third adhesive layer 26 is D, satisfying D ≤ 5 um, for example, 3 um, which is conducive to limiting the thickness of the third adhesive layer 26, thereby improving the thickness uniformity of the first electrode plate 11 or the second electrode plate 12. For a thickness of the fourth adhesive layer 27, reference is made to the thickness D of the third adhesive layer 26. Details are not described herein again.

In some other embodiments, the thickened layer 23 is applied on the first substrate layer 21 or the second substrate layer 24.

In some embodiments, a peel strength between the thickened layer 23 and the first substrate layer 21 is P₃, satisfying P₃ ≥ 0.05 N/mm. It can be understood that the thickened layer 23 is located on the side of the first substrate layer 21 facing away from the first adhesive layer 22, and a curvature radius of the thickened layer 23 is smaller than that of the first curved portion 1112, so that the stress on the thickened layer 23 during hot pressing is higher. For the thickened layer 23, the peel strength P₃ between the thickened layer 23 and the first substrate layer 21 satisfying the above condition is conducive to reducing the risk of the thickened layer 23 detaching from the first substrate layer 21.

For a test method of the peel strength P₃ between the thickened layer 23 and the first substrate layer 21, reference may be made to the test method for the peel strength P₁ between the second adhesive layer 25 and the first separator 13. Details are not described herein again.

It should be noted that, for the peel strength between the thickened layer 23 and the second substrate layer 24, reference may be made to the peel strength P₃ between the thickened layer 23 and the first substrate layer 21. Details are not described herein again.

In some embodiments, the thickened layer 23 is configured to melt when a temperature of the thickened layer 23 reaches a temperature threshold, the temperature threshold being C, satisfying C > 55°C. During hot pressing, a temperature of a battery cell needs to be raised to 45°C-55°C. The temperature threshold C satisfying the above condition is conducive to improving the stability of the thickened layer 23, and reducing the risk of the thickened layer 23 melting during hot pressing and being less likely to support the first curved portion 1112, thereby improving the reliability of the electrode plate assembly 10.

In some embodiments, materials of the first substrate layer 21 and second substrate layer 24 each include at least one of polypropylene, polyimide, or polyethylene terephthalate. A thickness of the first substrate layer 21 is 5 um-30 um, for example, the thickness is any one of 5 um, 8 um, 10 um, 12 um, 15 um, 20 um, 25 um, 28 um, or 30 um, or falls within a range defined by any two of these values.

In some embodiments, materials of the first adhesive layer 22 and second adhesive layer 25 each includes at least one of butyl rubber, acrylic adhesive, modified polyolefin, or styrene-isoprene-styrene block copolymer rubber. A thickness of the first adhesive layer 22 is 2 um-20 um, for example, the thickness is any one of 2 um, 4 um, 8 um, 12 um, 16 um, or 20 um, or falls within a range defined by any two of these values.

In some embodiments, a material of the thickened layer 23 includes at least one of biphenyl, ethylene sulfate, or propylene sulfate, where the biphenyl, ethylene sulfate, and propylene sulfate are additives of the electrolyte. The material of the thickened layer 23 is a material for additives required for the electrolyte used in the electrochemical apparatus 100. Such setting allows the thickened layer 23 not to form new impurities in the electrolyte after dissolved in the electrolyte, helping to reduce adverse effects on the performance of the electrolyte.

In these embodiments where the material of the thickened layer 23 is the material for the additives required for the electrolyte, the length of the first substrate layer 21 is set to L, and the length of the thickened layer 23 is set to L₁, satisfying 5 mm ≤ L₁ ≤ L. The length Li of the thickened layer 23 satisfying the above condition can limit the volume of the thickened layer 23, thereby reducing the risk of excessive additives dissolved in the electrolyte.

It can be understood that, in the specific implementation process, an amount of additive materials contained in the thickened layer 23 can be calculated, and then an amount of additives that need to be added to the electrolyte in advance can be obtained. A sum of the amount of additives added to the electrolyte in advance and the amount of additives contained in the thickened layer 23 is an amount of additives required for the electrolyte used in the electrochemical apparatus 100.

In these embodiments where the material of the thickened layer 23 is the material for the additives required for the electrolyte, the thickened layer 23 is prone to detaching in a solid state. Setting the peel strength P₃ between the thickened layer 23 and the first substrate layer 21 to satisfy the condition P₃ ≥ 0.05 N/mm helps to reduce the risk of the thickened layer 23 detaching from the first substrate layer 21 under stress.

In addition, persons of ordinary skill in the art should appreciate that the foregoing embodiments are for description of this application only but not for limiting this application. Appropriate modifications and variations made to the foregoing embodiments without departing from the essential scope of this application all fall within the scope of this application.

## Claims

1. A protective member (20), configured to be attached to an innermost curved portion of an electrode plate assembly (10) having a wound structure in an electrochemical apparatus (100), **characterized in that**, the protective member (20) comprises:
a first substrate layer;
a first adhesive layer (22), disposed on a surface of the first substrate layer, the first adhesive layer (22) being configured to be adhered to the electrode plate assembly (10); and
a thickened layer (23), disposed on a surface of the first substrate layer facing away from the first adhesive layer (22), the thickened layer (23) being configured to be soluble in an electrolyte.

2. The protective member (20) according to claim 1, **characterized in that**, a thickness of the protective member (20) is T, and 100 um ≤ T ≤ 500 um.

3. The protective member (20) according to claim 2, **characterized in that**, 120 um ≤ T ≤ 350 um.

4. The protective member (20) according to claim 1, **characterized in that**, a thickness of the thickened layer (23) is T₁, and 60 um ≤ T₁ ≤ 460 um.

5. The protective member (20) according to claim 4, **characterized in that**, 100 um ≤ T₁ ≤ 330 um.

6. The protective member (20) according to claim 1, **characterized in that**, the protective member (20) further comprises a second substrate layer and a second adhesive layer (25); the second substrate layer is disposed on a surface of the thickened layer (23) facing away from the first substrate layer, and the second adhesive layer (25) is disposed on a surface of the second substrate layer facing away from the thickened layer (23).

7. The protective member (20) according to claim 1, **characterized in that**, a third adhesive layer (26) is further provided between the thickened layer (23) and the first substrate layer, and the third adhesive layer (26) adheres the first substrate layer and the thickened layer (23).

8. The protective member (20) according to claim 7, **characterized in that**, a thickness of the third adhesive layer (26) is D, and D ≤ 5 um.

9. The protective member (20) according to claim 1, **characterized in that**, the thickened layer (23) is configured to melt when a temperature of the thickened layer (23) reaches a temperature threshold, the temperature threshold being C, and C > 55°C.

10. The protective member (20) according to claim 1, **characterized in that**, the protective member (20) satisfies at least one of the following conditions:
(1) a material of the first substrate layer comprises at least one of polypropylene, polyimide, or polyethylene terephthalate;
(2) a material of the first adhesive layer (22) comprises at least one of butyl rubber, acrylic adhesive, modified polyolefin, or styrene-isoprene-styrene block copolymer rubber; or
(3) a material of the thickened layer (23) comprises at least one of biphenyl, ethylene sulfate, or propylene sulfate, **characterized in that**, the biphenyl, ethylene sulfate, and propylene sulfate are additives of the electrolyte.

11. An electrochemical apparatus (100), comprising an electrode plate assembly (10) and a protective member (20); wherein, the electrode plate assembly (10) comprises:
a first electrode plate, comprising a first current collector (11a) and a first active substance layer (11b), the first active substance layer (11b) being disposed on a surface of the first current collector (11a);
a second electrode plate (12), comprising a second current collector (12a) and a second active substance layer (12b), the second active substance layer (12b) being disposed on a surface of the second current collector (12a);
a first separator (13), disposed between the first electrode plate (11) and the second electrode plate (12), the first separator (13) having a first end portion (131); and
a second separator (14), having a second end portion (141); the second electrode plate (12) is disposed between the first separator (13) and the second separator (14);
the first electrode plate, the second electrode plate (12), the first separator (13), and the second separator (14) are wound; in a winding direction from inside to outside of the electrode plate assembly (10), the first electrode plate (11) comprises a first starting section (111), the first starting section (111) having a third end portion (1111) and a first curved portion (1112) disposed along a first direction (X), the second electrode plate (12) comprises a second starting section (121), the second starting section (121) having a fourth end portion (1211) and a second curved portion (1212) disposed along the first direction (X); and in the first direction (X), the first end portion (131), the fourth end portion (1211), and the second end portion (141) are opposite to the first curved portion (1112); and
the protective member (20) comprises a first substrate layer, a first adhesive layer (22), and a thickened layer (23); the first adhesive layer (22) is disposed on a surface of the first substrate layer, the first adhesive layer (22) is adhered to the first active substance layer (11b) of the first curved portion (1112) facing the fourth end portion (1211), the thickened layer (23) is disposed on a surface of the first substrate layer facing away from the first adhesive layer (22), and the thickened layer (23) is configured to be soluble in an electrolyte and decomposed into at least one additive of biphenyl, ethylene sulfate, or propylene sulfate in the electrolyte.

12. The electrochemical apparatus (100) according to claim 11, **characterized in that**, when viewed in a second direction (Y), the protective member (20) partially overlaps with the first separator (13), the second direction (Y) being perpendicular to the first direction (X); and in the first direction (X), a length of an overlapping region of the protective member (20) and the first separator (13) is S, and 2 mm ≤ S ≤ 10 mm.

13. The electrochemical apparatus (100) according to claim 11, **characterized in that**, the protective member (20) extends along the winding direction from inside to outside of the electrode plate assembly (10); and in an extension direction of the protective member (20), a length of the first substrate layer is L, and a length of the thickened layer (23) is L₁, and 5 mm ≤ L₁ ≤ L.

14. The electrochemical apparatus (100) according to claim 11, **characterized in that**, in the first direction (X), a minimum distance between the fourth end portion (1211) and the first curved portion (1112) is F, and 100 um ≤ F ≤ 500 um.

15. The electrochemical apparatus (100) according to claim 11, **characterized in that**, the protective member (20) further comprises a second substrate layer and a second adhesive layer (25), the second adhesive layer (25) is disposed on a surface of the second substrate layer, the second adhesive layer (25) is adhered to the first separator (13), and the second adhesive layer (25) is further adhered to the second separator (14) across the fourth end portion (1211).

16. The electrochemical apparatus (100) according to claim 15, **characterized in that**, when viewed in the second direction (Y), the first adhesive layer (22) partially overlaps with the first separator (13), and the second adhesive layer (25) partially overlaps with the first separator (13), the second direction (Y) being perpendicular to the first direction (X); and
in the first direction (X), a length of an overlapping region of the first adhesive layer (22) and the first separator (13) is S₁, and a length of an overlapping region of the second adhesive layer (25) and the first separator (13) is S₂, and S₂ < S₁.

17. The electrochemical apparatus (100) according to claim 15, **characterized in that**, a peel strength between the second adhesive layer (25) and the first separator (13) is P₁, wherein P₁ ≥ 0.05 N/mm; and a peel strength between the second adhesive layer (25) and the second separator (14) is P₂, wherein P₂ ≥ 0.05 N/mm.

18. The electrochemical apparatus (100) according to claim 17, **characterized in that**, in the first direction (X), the third end portion (1111) is opposite to the second curved portion (1212).

19. The electrochemical apparatus (100) according to any one of claims 11 to 18, **characterized in that**, the first active substance layer (11b) has a cathodic polarity, and the first current collector (11a) is an aluminum foil; and the second active substance layer (12b) has an anodic polarity, and the second current collector (12a) is a copper foil.

20. The electrochemical apparatus (100) according to any one of claims 11 to 18, **characterized in that**, when viewed in the second direction (Y), the first end portion (131), the second end portion (141), and the fourth end portion (1211) are aligned with each other, the second direction (Y) being perpendicular to the first direction (X).

21. An electric device (1000), comprising the electrochemical apparatus (100) according to any one of claims 11 to 20.
